**Europäisches Patentamt**

**European Patent Office**

**Office européen des brevets**

(19)

(11) **EP 0 779 530 A1**

(12) **EUROPEAN PATENT APPLICATION**
published in accordance with Art. 158(3) EPC

(43) Date of publication:
18.06.1997 Bulletin 1997/25

(51) Int. Cl.$^6$: **G02B 26/06**

(21) Application number: 96926678.2

(22) Date of filing: 17.06.1996

(86) International application number:
PCT/RU96/00161

(87) International publication number:
WO 96/35973 (14.11.1996 Gazette 1996/50)

(84) Designated Contracting States:
AT BE CH DE DK ES FI FR GB GR IE IT LI LU MC NL PT SE

(30) Priority: 06.05.1996 RU 96108197

(71) Applicant: YALESTOWN CORPORATION N.V.
Curaçao, Netherlands Antilles (AN)

(72) Inventor: SAFRONOV, Andrei Gennadievich
Moskovskaya obl. Kaliningrad, 141070 (RU)

(74) Representative: BOVARD AG - Patentanwälte
Optingenstrasse 16
3000 Bern 25 (CH)

(54) **ADAPTIVE OPTICAL MODULE**

(57) The invention pertains to the field of controllable optics and can be used for manipulating a radiation wave front or for correcting phase distortions in optical equipment and in a wide range of systems including industrial laser systems, optical telescopes of different spectral ranges, and optical guidance and tracking systems. The invention in essence lies in improving the range and precision of the phase distortion correction while also increasing the maximum permissible power of the radiation used and simplifying the adaptive optical system. This has been achieved by using in the adaptive optical module a dynamic adjusting head in which is mounted a deformable dimorphic mirror, coolable if necessary, in the form of a semi-passive dimorphic structure containing a system of multiple-layer piezoelements, a radiation detector in the form of a hexagonal photodiode lattice and hexagonal lens lattice. All the optical elements of the module including the radiation detector can be fitted in the same housing provided with inlet and outlet optical windows. In addition, the proposed design increases the sensitivity and reliability of the adaptive optical module, and significantly increases its operational potential.

FIG. 1

**EP 0 779 530 A1**

Description

FIELD OF INVENTION

The present invention relates to the controllable optics and may be used to radiation wavefront control or phase distortion compensate in the optical devices and wide class systems, including the industrial laser technological complexes, optical telescopes of a different spectral range and optical guidance and tracking systems.

BACKGROUND OF THE INVENTION.

An adaptive optics atmospheric phase distortion compensation system in a telescope is known (see J.Anuskewicz, M.J.Northcott, J.E.Graves." Adaptive optics at the University of Hawaii:II.Control system with real-time diagnostics" Proc.SPIE, 1994, vol.2201, p.879-888 and J.E.Graves, F.Roddier, M.J.Northcott, J.Anuskewicz." Adaptive optics at the University of Hawaii:1V. A photon counting curvature wavefront sensor. "-Proc.SPIE, 1994, vol 2201, p.502-507), and comprises a correcting device including a deformable bimorph mirror on the basis of an active bimorph piezoelectric structure with 13 control electrodes in the form of central circle and two concentric rings, each of which is divided into six separate segments(see J.-P.Gaffard, P.Jagourel, P.Gigan. "Adaptive Optics: Description of available components at Laserdot."-Proc.SPIE, 1994, vol 2201, p.688-702) and may comprises a mirror for a wavefront tilts dynamic compensation; a beam-splitting element; a membrane modulating mirror; a master oscillator; a modulating mirror signal amplifier, an input of which is connected with one of said master oscillator outputs, and output of which is connected with said modulating mirror; an image-forming optics; an array, consisting of 13 single lenses, an arrangement and a light aperture configuration of each of said lenses are corresponding to said deformable bimorph control electrode; all optical element, said element is conjugated to said lens array in such a way, that all array subaperture focuses coincide with a back plane thereof; an optical radiation receiver, comprising 13 single avalanche photodiodes; a set of the fiber-optic cables, each of which is conjugated to said lens array single subaperture focus and is connected with said optical element on the one side and is conjugated with said radiation receiver single photodiode on the other side; an electronic amplifier-converter, the inputs of which are connected with said correcting device.

The operation the above-mentioned adaptive optics system is based on the measurement of a wavefront local curvature inside of a light beam cross-section and the local radial phase tilts on the wavefront boundary with the following compensation of said tilts by means of bimorph mirror. The additional mirror may be used to compensate of said wavefront common tilts on the basis of the corresponding measurement data. Said modulating membrane mirror forms two telescope pupil extrafocal images on the lens array: the first image is forming when said modulation mirror being concaved as much as possible; the second image is forming when said mirror is convexed as much as possible. When the modulation is absent the plane membrane mirror is forming a telescope pupil image on the lens array precisely. When no phase distortions exists in the light beam both said images will be identical, when the phase distortion being existed said images will be different. As a result the different extrafocal image signals will be different for each of said photodiodes. An error signal in each control channel is a difference of the same radiation receiver photodiode signals, corresponding to different extrafocal images. The amplified error voltage is applied to the corresponding electrode of said bimorph mirror which compensates said phase distortions in the optics system. The disadvantages of the above-mentioned adaptive optics system are:

1) the low amplitude of the compensatible phase distortions, caused by a low magnitude of the bimorph mirror controllable deformations and a low sensitivity thereof (maximum +/- 10 and maximum 25 /kV respectively);
2) a great complexity of said system, caused by the complexity and high labour content of the system single component producing, in particular producing of bimorph mirror 13 high-voltage control units (+/- 400 V) and the array of lenses, 12 of which have a non-standard configuration in the form of ring segments;
3) an impossibility of a substantial phase correction accuracy increasing by means of a control channel amount increasing, caused by the impossibility of the producing of said effective bimorph mirrors of given class with great numbers of control electrodes;
4) a low phase correction accuracy, caused by a low symmetry order of the bimorph mirror single control electrodes and the lens array single subapertures;
5) a low acceptable input optical radiation power level ( 1 kW approximately), caused by the impossibility of the coolable bimorph mirrors of given class producing.

The adaptive optics system for the compensation of the atmospheric phase distortions in a telescope is known (see J.S.Pazder, E.H.Richardson, G.Barrick "Optical Designs of Adaptive Optics Modules for the Canada-France-Hawaii and Gemini Telescopes."-Proc. Of the ICO-16 Satellite Conference on Active and Adaptive Optics, Aug. 2-5, 1993, Garching/Munich, Germany, F.Merkle ed., ESO Conference and Workshop Proc., 48, p.59-64 and R.Arsenault, D.Salmon, J.Kerr and et.al."PUEO", The Canada-Franc-Hawaii Telescope Adaptive Optics Bonnette.1.System Description."-Proc.

SPIE, 1994, vol.2201, p.833-842), and comprises a correcting device, including a wavefront tilt dynamic compensating mirror and a deformable bimorph mirror on the basis of an active piezoelectric bimorph structure with 19 control electrodes in the form the central ellipse and two concentric elliptical rings divided into 6 and 12 separate segments respectively (see C.Boyer, P.Jagourel, J.P.Gaffard et el. "Laserdot components of the PUEO Adaptive Optics System."-Laserdot-Cilas, September 1995): a beam-splitting element; a modulating membrane mirror; a master oscillator; a modulating mirror signal amplifier, the input of which is connected with one of the master oscillator outputs and the output of which is connected with said modulating mirror; image-forming optics; an array of 19 single lenses, an arrangement and a light aperture form of each of said lenses are corresponding to said single control electrode of said deformable bimorph mirror; an optical element, which is conjugated to said lens array in such a manner, that all array subaperture focuses coincide with a back plane thereof, a radiation receiver, comprising 19 single avalanche photodiodes; a set of fiber-optic cables, each of which is conjugated to said lens array single subaperture focus and is connected with said optical element on the one side and is conjugated to said radiation receiver single photodiode on the other side; an electronic amplifier-converter, the inputs of which are connected with said radiation receiver and master oscillator outputs, and the outputs of which are connected with said correcting device. The operation of said adaptive optics system is analogous the above-described system with the difference that there are 19 phase control channels in said system instead 13, 12 of which are used for a wavefront peripheral radial tilt correction. The disadvantages of said adaptive optics are:

1) the low amplitude of the compensatible phase distortions, caused by a low magnitude of the bimorph mirror controllable deformations and a low sensitivity thereof (a maximum mirror controllable radius of curvature equals to +/- 34 ) 2) a great complexity of said system, caused by firstly a necessity of the special mirror using to wavefront tilts compensate and secondly a complexity and high labour content of the system single component producing, in particular producing of bimorph mirror 19 high-voltage control units (+/- 400v) and the array of lenses, 18 of which have a non-standard configuration in the form of annular segments;

3) an impossibility of a substantial phase correction accuracy increasing by means of a control channel amount increasing, caused by the impossibility of the producing of said effective bimorph mirrors of given class with great numbers of control electrodes;

4) a low phase correction accuracy, caused by a low symmetry order of the bimorph mirror single control electrodes and the lens array single subapertures;

5) a low acceptable input optical radiation power level ( 1 kW approximately), caused by the impossibility of the coolable bimorph mirrors of given class producing.

An adaptive optics module, used for a compensation of the atmospheric phase distortion in a telescope and adopted as the most close to the present invention prior art is known and comprises a correcting device, including a deformable bimorph mirror, a beam-splitting element, a modulating mirror, a master oscillator, a modulating mirror signal amplifier, an input of which is connected with one of said master oscillator outputs, and an output of which is connected with said modulating mirror, an image-forming optics, a radiation receiver, made in form of photodiode array, and an electronic amplifier-converter, the inputs of which are connected with said radiation receiver and said master oscillator outputs, and outputs of which are connected with said correcting device (see,e.g., J.E.Graves, D.L.McKenna."The University of Hawaii adaptive optics system:111. The Wavefront Curvature Sensor. "-Proc.SPIE, 1991, vol1542, p.262-272). The operation of said optics module is analogous to the above-described systems with the difference that in the present case when the membrane mirror modulation being existed the telescope pupil extrafocal images are forming on said radiation receiver directly, but not on said lens array. The disadvantages of said known system are:

1) the low amplitude of the compensatible phase distortions, caused by a low magnitude of the bimorph mirror controllable deformations and a low sensitivity thereof (maximum +/- 10 and maximum 25 /kV respectively);

2) a great complexity of said system, caused by the necessity of using of bimorph mirror 13 high-voltage control units (+/- 400v) and a special wavefront tilt compensating mirror;

3) an impossibility of a substantial phase correction accuracy increasing by means of a control channel amount increasing, caused by the impossibility of the producing of said effective bimorph mirrors of given class with great numbers of control electrodes;

4) a low phase correction accuracy, caused by a low symmetry order of the bimorph mirror single control electrodes and the lens array single subapertures;

5) a low acceptable input optical radiation power level ( 1 kW approximately), caused by the impossibility of the coolable bimorph mirrors of given class producing.

## SUMMARY OF THE INVENTION

The technical result of the present invention consists in a range broadening and an optical radiation phase distortion compensation accuracy increasing with a simultaneous increasing of an accepted power level thereof and an adaptive optics system simplification.

Said result is got by means of proposed adaptive optics module utilisation, said module comprises a correcting device ,including a deformable bimorph mirror; a beam-splitting element; a modulating mirror; a master oscillator; a modulating mirror signal amplifier, an input of which is connected with one of the master oscillator outputs and an output of which is connected with said modulating mirror; an image-forming optics; a radiation receiver, made in the form of a photodiode array; and an electronic amplifier-converter, the inputs of which are connected with said radiation receiver and said master oscillator outputs and the outputs of which are connected with said correcting device, said correcting device is made in the form of a dynamic aligning head with said installed therein deformable bimorph mirror, made in the form of a semi-passive bimorph structure, comprising a hexagonal mosaic system of a multilayer piezielectric elements of hexagonal or circular configuration, said radiation receiver is made in the form of the hexagonal array of photodiodes with a circular or hexagonal light aperture, and said electronic amplilier-converter is made with a possibility of the dynamic aligning head drives control signal generating. In addition to this said adaptive optics module may be provided with the hexagonal array of lenses with the circular light apertures, arranged in front of said radiation receiver.

Each of said radiation receiver photodiodes may be arranged in the lens hexagonal array corresponding subaperture focus. Said module may be also provided with: a set of the fiber-optic cables, each of which is conjugated to the lens hexagonal array single subaperture on the one side and to the radiation receiver corresponding photodiode on the other side; an optical element, conjugated to said lens hexagonal array on the one side and to the set of single fiber-optic cables on the other side, the focuses of all lens hexagonal array subapertures being coincided with the back plane of said optical element; and a casing, wherein all optical elements are disposed, including the radiation receiver, comprising the input and output optical windows, said input optical window being disposed in front of said deformable bimorph mirror in a path of the beam, incoming to said mirror, and said output optical window being disposed beyond said beam-splitting element in the path of the beam, reflected therefrom or passed therethrough. The input optical window may be also made in the form of an objective, an input light aperture thereof corresponds to a transversal dimension of the beam, entering into said module, and an output light aperture thereof is conditioned with said deformable bimorph mirror control light aperture with regard for a mirror tilt angle relatively to the beam, being incident to said mirror. Said deformable bimorph mirror may be made as coolable product. Said electronic amplifier-converter may comprise a preamplifier, the inputs of which are connected with the radiation receiver corresponding photodiode, and the outputs of which are connected with the inputs of a synchronous detector, provided with a subtraction circuit, one of the inputs thereof is connected with the master oscillator output, and a converter and a multiplier unit, connected in series respectively through the first amplifier with the dynamic aligning head drives and through a digital-to-analogue converter and a second amplifier with the deformable bimorph mirror multilayer piezoelectric elements are connected parallel to the output thereof.

A broadening of the optical radiation phase distortion compensation range, i.e. the wavefront compensatible distortion maximum amplitude increasing is achieved owing to that the deformable bimorph mirrors made in the form of a semi-passive bimorph structure, comprising a hexagonal mosaic system of multilayer piezoelectric elements of hexagonal or circular configuration. Really in such a case a mirror optical surface controllable displacement amplitude is increased owing to the multilayer piezoelectric elements utilisation in said semi-passive bimorph mirror and a sensitivity of said mirror also increased. These both effects take place even as compared with the active bimorph mirror, used in the prior art. In the case when one-channel multilayer bimorph mirror, including one multilayer piezoelement, being used, both these effects may be corroborated by the next numerical example: the reflective surface deformations at maximum voltage 300 V are of order 21 (for the mirror, used in the prior art- 10 at 400V); the sensitivity of the order 70 /kV ( for the mirror, used in the prior art- 25 /kV) see A.G. Safronov, Kvantovaya elektronika, 1995, v 22, N 11, pp.1113-1117. It is necessary to note that said above-adduced data are averaged and they correspond top the bimorph mirror with a molybdenum reflective plate, a light aperture of which is slightly greater than in the mirror, used in the prior art. Since the deformable bimorph mirror optical surface displacement are increased, so the wavefront compensatible distortion maximum amplitude increases in the proposed adaptive optics module as compared with the prior art, i.e. the optic radiation phase distortion compensation range broadening is achieved. The corresponding characteristic feature in such a case consist in that the deformable mirror semi-passive bimorph structure in the proposed adaptive optics module comprises the multilayer elements.

It is necessary to note that the utilisation of said characteristic feature in the known prior art and analogues is impossible because the single multilayer piezoelements may be realised in the semi-passive bimorph structure only. The optic radiation phase distortion compensation accuracy increasing is achieved in the proposed invention owing to the possibility of increasing of the phase controlling channel amount in said adaptive system. Really the measurement and compensation of the wavefront distortion are possible in such a case with the greater spatial frequency than in the prior art as a result a compensation residual error is reduced, i.e. the compensation accuracy is increased.

The corresponding characteristic features in such a case are:

the deformable semi-passive bimorph structure comprises hexagonal mosaic system of multilayer piezoelectric elements of hexagonal or circular configuration in said adaptive module;

the radiation receiver is made in the form of the hexagonal array of photodiodes with the circular or hexagonal light aperture.

It is necessary to note that the substantial increasing of the phase controlling channel numbers is practically impossible in the known prior art or analogues, because the deformable mirror on the basis of active bimorph structure with the great numbers of the control electrodes formation is as a matter of fact an undecidable problem owing to the impossibility of both control electrodes electric arrangement and a service accepting to them.

It is also necessary to note that an adaptive optical system of atmospheric phase distortion compensation in the telescope is known from the prior technical level, said system comprises a semi-passive deformable mirror with a hexagonal system of 19 or 37 control electrodes (see F.F.Forbes, N.Roddier. "Adaptive optics using curvature sensing"-Proc. SPIE, 1991, vol.1542, p. 140-147). Nevertheless the known system as distinct from the proposed module doesn't comprise said multilayer piezoelements in the deformable bimorph mirror, but comprises a piezoelectric plate with control electrodes, applicated on the outer surface thereof. The operating characteristics and the efficiency of said mirror are very low, in particular, said mirror has a very low reflective surface displacement amplitude, and the known adaptive optics system on the basis thereof has therefore a narrow phase compensation range (on the wavefront distortion amplitude).

In addition to above-stated:

1) it is also impossible to increase substantially the amount of control channels in the known system owing to the impossibility of the control electrode electrical arrangement;

2) the bimorph mirror, used in the known system, has low operating characteristics, is complex to service in the real optics system and is so high labour-consumption while manufacturing that its practical realisation is impossible;

3) in the known system a radiation receiver, comprising a set of the prisms and a solid-state photomultiplier is used, which is substantially distinct from the applicated one in the present invention, the practical realisation and an efficiency of said radiation receiver are very low.

The efficiency of the known system as a whole and the "serviceability" thereof are therefore also too low. Thus on the basis of above-stated it is possible to assert that only a combination of said characteristic features enables to get the above-mentioned technical result, i.e. the range broadening and the optical radiation phase distortion compensation accuracy increasing.

The simplification of said adaptive optics system in the proposed invention is provided by the next reasons:

1) owing to excluding of the special mirror to compensate the wavefront common tilts dynamically and replace said mirror with the dynamic aligning head. The corresponding characteristic features in the present case are: the correcting device is made in the form of said dynamic aligning head with the installed therein deformable bimorph mirror, made in the form of the semi-passive bimorph structure, and said electronic amplifier-converter is made with the possibility of the generating of the dynamic aligning head drive control signals;

2) owing to decreasing said deformable bimorph mirror control voltage and as a consequence to replace the bulky and complex mirror control high-voltage unit with a low-voltage apparatus. The deformable bimorph mirror control voltage decreasing is provided in turn by the multilayer piezoelements utilisation in the design thereof. Really in such a case it is necessary to apply the substantially lesser control voltage to the deformable bimorph mirror as compared with the known prior art and analogues for the compensation of the phase distortions with the predetermined amplitude. Said high-voltage control units may be therefore replaced with the low-voltage units without the adaptive optics module efficiency decreasing. The corresponding characteristic in such a case consists in that said deformable bimorph structure comprises said hexagonal mosaic system of multilayer piezoelectric elements. It is necessary to note that the use of the dynamic aligning head for the adaptive optics system simplification is known from the prior technical level (see A.V. Ikramov, A.G.Safronov."Optical adaptive module", RU Patent according to the application 92010078/28(055859) of o7.12.1992, Int.Cl.G02B 26/06, favourable decision of 04 08 1994). Nevertheless only the combination of the both above-listed characteristic features enables to get the substantial above-mentioned technical result with the guarantee, i.e. to achieve the substantial guaranteed simplification of said adaptive optics system in the proposed invention both in optomechanical and electronic parts.

In addition to this it is necessary to note that the use of the first of two above-named characteristic features in the prior art, namely, that said correcting device is made in the form of the dynamic aligning head with the installed therein deformable bimorph mirror, is impossible.

In any case if for this purpose the standard industrial aligning head, e.g.,B-455.20 (or B-455.30) Gimbal. Mount Mirror Holder with Piezoelectric Fine Adjustment ( at Catalogue B-455 or B-455-30) of Physik Instrumente (PI) GmbH Company is used. The reason of this- the substantial overall dimensions and weight of the deformable bimorph mirror, used in the prior art (diameter-100 mm, length-80 mm, weight-order of 1 kg). As all example these data may be compared with the analogous characteristics of the multilayer one-channel semi-passive bimorph mirror (the multichannel semi-passive bimorph mirror weight-dimensions parameters will obviously differ with each other unsubstantially): diameter-60-70 mm, thickness (without electrical connector)- 13 mm, weight- about 250g (see A.G. Safronov, Kvantovaya elektronika, 1995, v 22, N 11, pp 1113-1117). Said deformable mirror with the above-listed characteristics is practically ideally installed into said dynamic aligning head, including installing the above-mentioned production specimen. The achievement of said above-mentioned technical result (i.e. the adaptive optics system simplification) as compared with the prior art is thus provided in the case of the combination of the above-listed features only, namely, the correcting device is made in the form of the dynamic aligning head with the installed therein deformable bimorph structure, comprising the hexagonal mosaic system of multilayer piezoelectric elements, and the electronic amplifier-converter is made with the possibility of the generating of the dynamic aligning head drives control signals.

One of the characteristic features of the present invention is that for the purpose of the adaptive optics module sensitivity increasing the hexagonal array of lenses with the circular light apertures, arranged in front of said radiation receiver is provided. The adaptive optics module sensitivity increasing is achieved in such a case by the possibility of all radiation receiver photodiode light aperture decreasing and as a result dark currents thereof and the system internal noises decreasing. It is necessary to note that lens array utilisation to increase of the sensitivity takes place in the known analogues. Nevertheless in both cases the single lenses are used in these arrays, The lens configuration, corresponding to the bimorph mirror single electrodes, is non-standard. The manufacture and the optical control of said lenses are therefore complex and laborious. The possibility of replacing of the non-standard optical lenses with the usual circular lenses results in further simplification of said adaptive optics module. Thus only the use of the present characteristic feature at whole (i.e. the module is provided with the hexagonal array of lenses with the circular light apertures, arranged in front of the radiation receiver) enables not only to get the adaptive optics module sensitivity increasing, but provides the substantial technical result, on the getting of which the present invention is aimed (the adaptive optics system simplification).

To increase the sensitivity and the reliability of the proposed adaptive optics module and to further broaden the functional potentialities thereof each of radiation receiver photodiodes may be disposed in a lens hexagonal array corresponding aperture focus; said module may be provided with a set of the fiber-optic cables, each of which is conjugated to the single aperture of the lens hexagonal array on the one side, and to the radiation receiver corresponding photodiode on the other side. Said module may be also provided with the optical element, conjugated to the lens hexagonal array on the one side and to the set of single fiber-optic cables on the other side, the focuses of all lens hexagonal subapertures being coincided with a back plane of said optical element. Said module may be provided with a common casing, wherein all optical elements are disposed, including said radiation receiver. Said casing comprises the input and output optical windows, the input optical window being disposed in front of deformable bimorph mirror in a path of a beam, incoming thereto, and the output optical window being disposed beyond the beam-splitting element in the path of a beam, reflected therefrom or passed therethrough, said input optical window may be made in the form of an objective, an input light aperture thereof corresponds to a transversal dimension of a beam, entering into said module, and an output light aperture thereof is conditioned with a deformable mirror controllable light aperture with regard for a mirror tilt angle relatively to the beam, being incident thereon. Said electronic amplifier-converter may comprise the preamplifier, the inputs of which are connected with the radiation receiver corresponding photodiodes and the outputs of which are connected with the inputs of the synchronous detector, provided with the subtraction circuit, one of the inputs thereof is connected with the master oscillator output, and a converter and a multiplier unit connected in series respectively through the first amplifier with the dynamic aligning head drives and through the digital-to-analogue converter and a second amplifier with the deformable bimorph mirror multilayer piezoelectric elements are connected parallel to the output thereof.

As it was noted above one of the present adaptive optics module attributes is that said deformable bimorph mirror is made in the form of coolable product for the purpose of the input optical radiation acceptable power level increasing. There is necessary to note that the use of the present characteristic feature in the prior art is impossible (i.e. said technical result- the input optical radiation acceptable power level increasing- isn't achievable), because there is impossible to realise a reflective surface cooling system in said bimorph deformable mirror on the basis of active bimorph structure. Therefore the combination of the characteristic features only ( that said deformable bimorph mirror is made in the form of the semi-passive bimorph structure and in the form of the coolable product simultaneously) enables to get said technical result.

BRIEF DESCRIPTION OF DRAWINGS

In Fig. 1 a diagrammatic design of an adaptive optics module, including a possible embodiment of a casing thereof is shown.

In Fig 2 a dynamic aligning head design is schematically shown to explain a principle of the operation thereof.

In Fig.3 a diagrammatic section of a deformable bimorph mirror on the basis of semi-passive bimorph structure is shown when 5 piezoelectric plates (piezolayers) being used in each multilayer piezoelement.

In Fig.4 a view of a deformable bimorph mirror from the multilayer piezoelectric elements side is shown for the case when said elements have a hexagonal configuration and a number thereof equals to 19.

In Fig.5 a radiation receiver is shown for the case when said receiver is an array consisting of 19 photodiodes with hexagonal light apertures.

In Fig.6 an electronic amplifier-converter block diagram is shown.

In Fig.7 a fragment of the adaptive optics module design is shown when the array of lenses with circular light apertures being used.

In Fig.8 a lens array is shown for the case when said lenses have a circular configuration and a common number thereof equals to 19.

In Fig.9 a fragment of an adaptive optics module design is shown when an additional optical element and a set of the fiber-optic cables being used beyond the lens array.

## THE BEST EMBODIMENT OF THE INVENTION

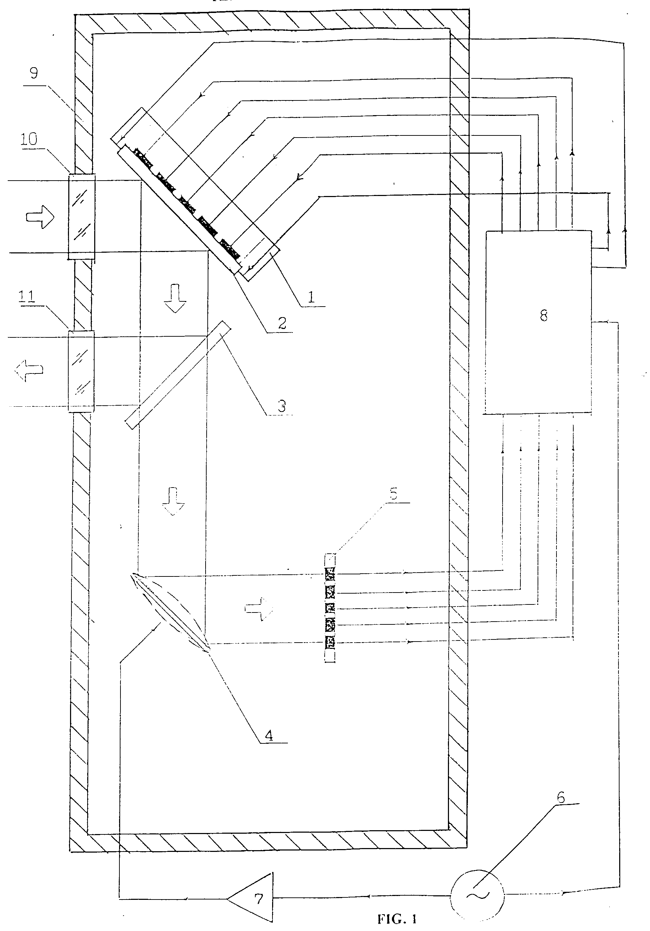

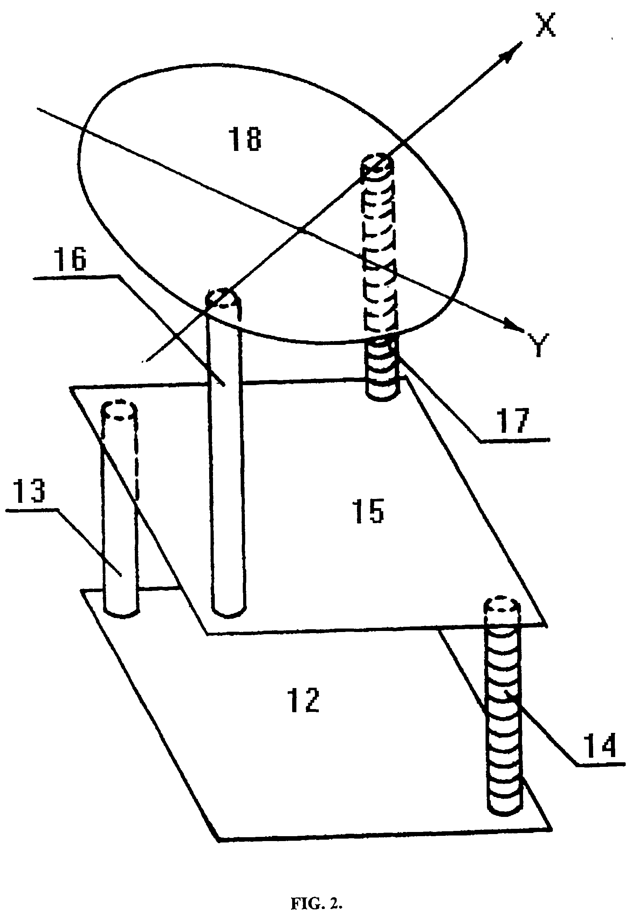

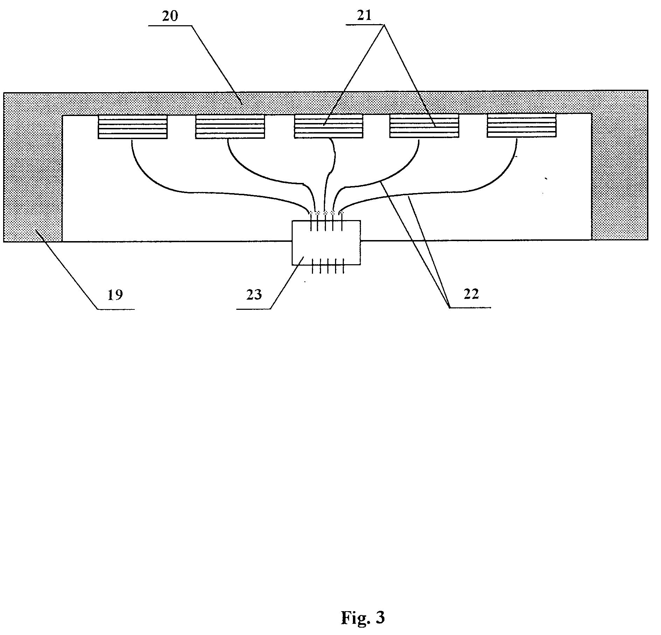

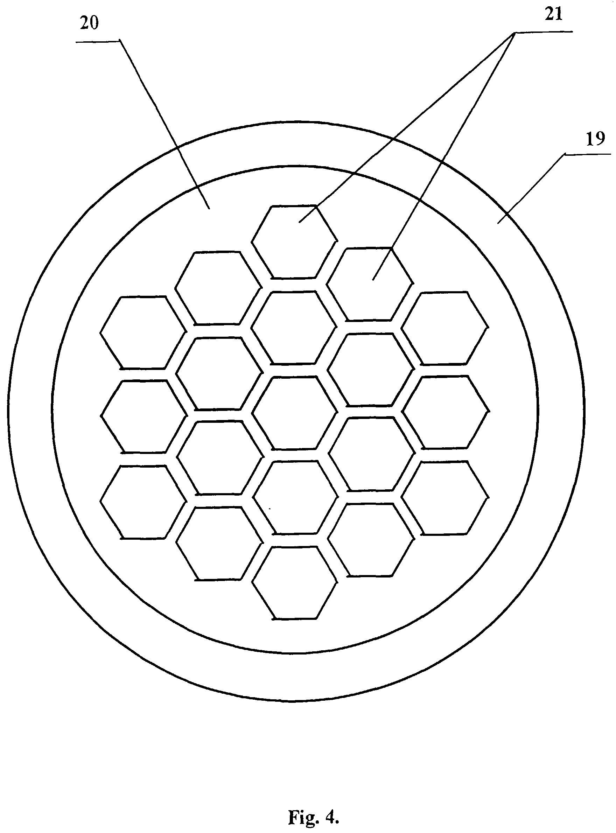

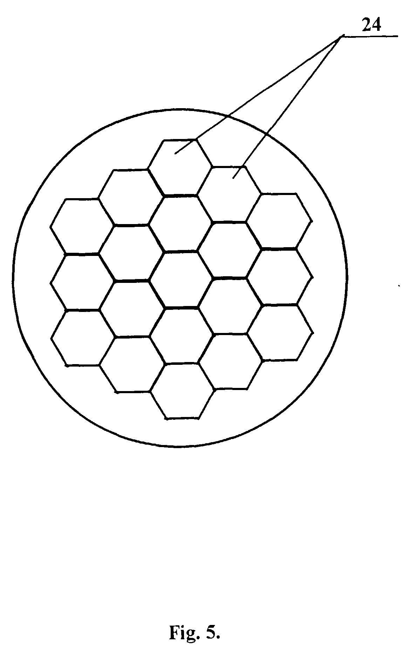

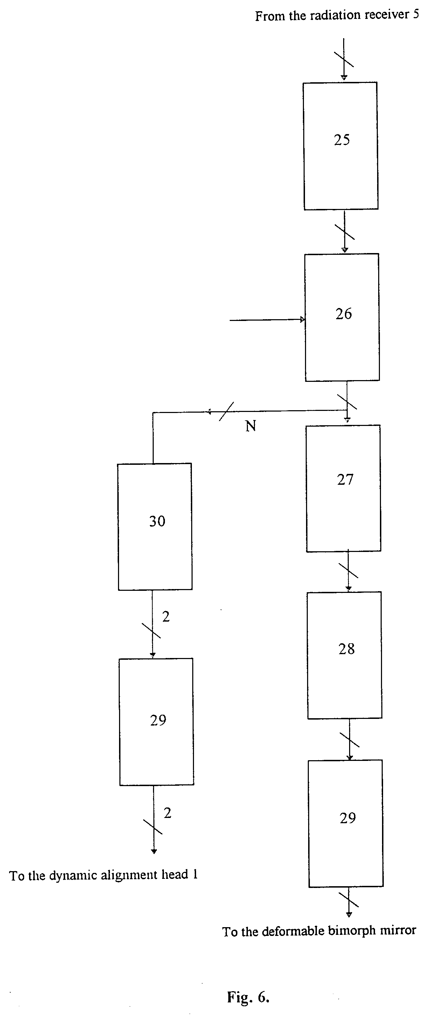

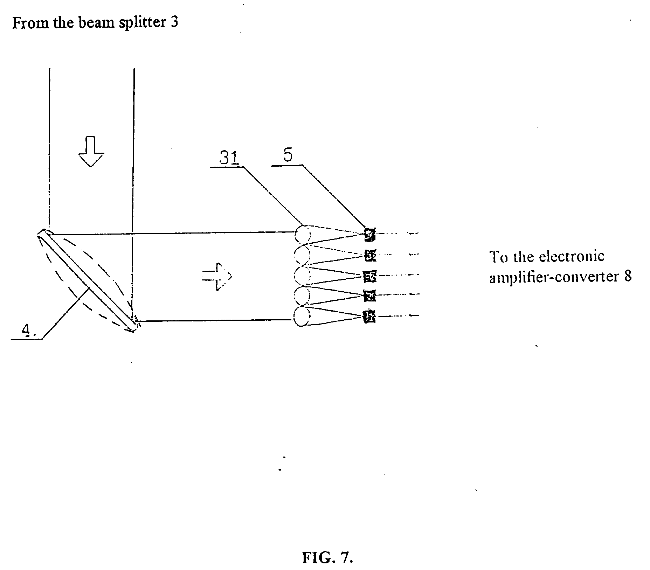

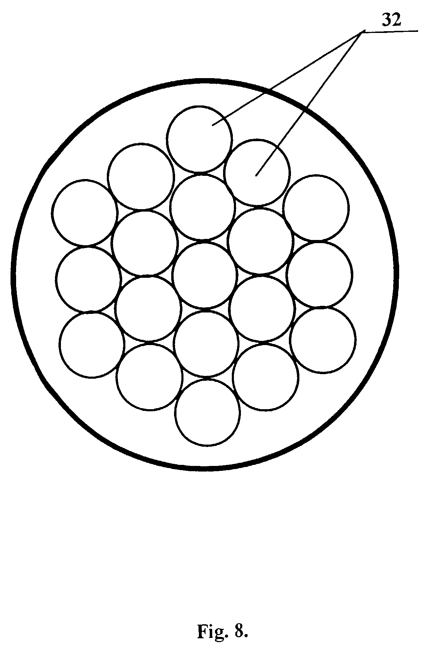

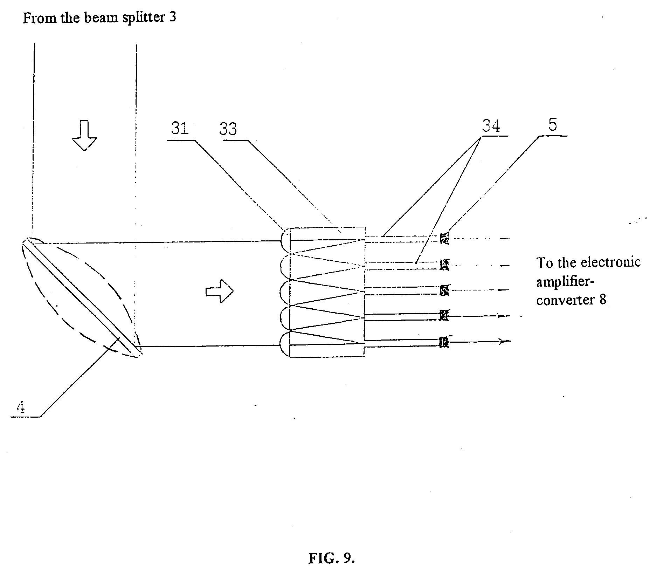

An adaptive optics module comprises a dynamic aligning head 1 with a deformable bimorph mirror 2, installed therein, a beam-splitting element 3, a modulating mirror 4, a radiation receiver 5, a master oscillator 6, a modulating mirror signal amplifier 7 and an electronic amplifier-converter 8, see Fig 1. In addition to this said adaptive optics module comprises optionally a casing 9, including the input 10 and output 11 optical windows, Fig. 1. Said dynamic aligning head comprises a stationary base 12, two support 13 and 16, two piezoelectric drives 14 and 17, a movable frame 18, see Fig.2. Said deformable bimorph mirror comprises a casing 19, a reflective plate 20, the multilayer piezoelectric elements 21, connecting electric wires 22 and an electric connector 23, see Fig.3 and Fig.4. Said radiation receiver comprises the photodiodes 24, see Fig.5. Said electronic amplifier-converter comprises a preamplifier 25, a synchronous detector and a subtraction circuit 26, a control matrix multiplier 27, a digital-to-analogue converter 28, the output amplifiers 29 and a converter 30, see Fig.6. Said adaptive optics module comprises optionally an array of lenses 31, see Fig.7, said lenses have the circular light apertures 32, see Fig. 8, an optical element 33 and a set of the fiber-optic cables 34, see Fig. 9. Said piezodrives, being a part of said dynamic aligning head design, are conventionally shown in Fig. 1 by the arrows, A direction of the optical beam propagation between the optical components and a direction of an electric signal passage between the electronic devices are shown in Fig.7 by the corresponding arrows 7 and 9. Both extreme positions of the modulating mirror optical surface 4 are schematically shown in Fig.1,7,9 by dotted lines. Two mutually perpendicular coordinate axes are denoted in Fig.2 by the symbols X and Y.

The symbols "N" and "2" near the single unit communication lines in Fig 6 denote that the corresponding devices have several input and output channels.

Said adaptive optics module operates in a following way.

The input optical radiation (a beam) incomes (see Fig. 1) to said deformable bimorph mirror 2, installed within said dynamic aligning head 1 and further to said beam-splitting element 3, from which small portion of said radiation is carried away into a receiving optical channel (i.e. to said modulating mirror 4) and the main beam incomes to the module output. An optical radiation, reflected from said modulating mirror 4, incomes to said radiation receiver 5 and the electric signals are applied from said receiver to the input of said electronic-converter 8. In the initial state an optic configuration of said deformable bimorph mirror 1 and said modulating mirror 4 is plane, and all module optomechanical elements (1,2,3,4 and 5) including the image-forming optics (not shown) in drawings) are aligned in such a manner that a real focal image either of a radiation source or an observation object is formed on said radiation receiver. While a module optical circuit initial aligning an optical beam with a planar wavefront is used. There is necessary to note that the angels of an optical beam incidence to said optical elements are conventionally shown and may be varied in each specific case in the necessary way.

When an electrical. e.g., sinusoidal signal being income in initial state from said master oscillator 6 through said amplifier 7 to said modulating mirror 4 the latter changes its curvature. Said modulating mirror 4 may be made in the form of membrane or bimorph product. Two extrafocal images are forming on said radiation receiver 5 at the moments of time, corresponding two maximum modulating mirror saggings, opposite in sign (see Fig.1). These extrafocal images are identical in the initial state when the input optical beam with the plane wavefront being income.

An electric signal from each radiation receiver photodiode 24 (see Fig.5) is applied to the input of the amplifier-converter 8, in which each signal is amplified at first in said preamplifier 25 (see Fig.6), and is then applied to synchronous detector and subtraction circuit 26. The channel number of said preamplifier 25 and said synchronous detector with said subtraction circuit 26 (see Fig 6) corresponds to amount of said receiver radiation photodiodes 24 (see Fig.5).

In Fig.6 it is shown by a symbol "N" near the communication lines of the corresponding units. Two signals are detecting in each channel of said synchronous detector 26(see Fig.6), each of which is proportional to the optical radiation intensity on the corresponding photodiode 24(see Fig. 5) of said radiation receiver 5 (see Fig. 1) at the moments of time, corresponding two extreme positions of said modulator mirror optical surface, i.e. when two extrafocal images being formed on the radiation receiver 5. For this purpose an electric signal is applied from said master oscillator 6(see Fig. 1) to said synchronous detector 26 (see Fig.6) The electric signal at the output of each channel of said subtraction circuit 26 (see Fig.6) is the difference of said both signals.

Since in the initial state while the input optical beam being had the plane wavefront the formed extrafocal images are identical, so in the present case the electric signals at the output of all channels of said synchronous detector and said subtraction circuit 26 will be equal to zero. As a result all electric signals at the electronic amplifier-converter input (see Fig.6) and at the dynamic aligning head 1 and deformable bimorph mirror 2 inputs will be equal to zero, the mirror configuration being remained plane and the output optical beam being had the plane wavefront as earlier. When the wavefront distortions being existed in the input optical beam the extrafocal images, forming on the radiation receiver 5(see Fig.1) at the moments of time corresponding to two extreme positions of the modulating mirror reflective surface, are different. As a result the output electric signal in each channel of said synchronous detector and subtraction circuit 26 (see Fig.6) will be other than zero. The corresponding difference signal at the input of each such channel for the inner photodiodes 24 (see Fig.5) of the radiation receiver 5(see Fig. 1) will be proportional to the local curvature ( inversely proportional to the curvature radius) of the optical beam wavefront, i.e. to the wavefront curvature within the limits of the single subaperture (the sensitivity pad of the single photodiode 24) of the radiation receiver 5. For the peripheral photodiodes 24 (see Fig. 5) of the radiation receiver 5 (see Fig. 1) said difference signal at the output of each corresponding channel of the synchronous detector and the subtraction circuit 26 (see Fig.6) will be proportional to the local tilt of input optical beam wavefront (see F Roddier."Curvature sensing and compensation, a new concept in adaptive optics. "-Appl. Opt , 1988, v.27, 7, p 1223-1225).Both these conditions are achieved by conditioning of the radiation receiver light aperture and the transversal dimension of said optical beam, incoming thereto.

The electric signals are applied from the synchronous detector and the subtraction circuit output (see Fig.6) to the multiplier unit 27, which generates the deformable bimorph 2(Fig.1) control signal by the matrix multiplication operation execution:

$$\mathbf{V=C \times U} \qquad\qquad (1)$$

where U- vector of output signals of synchronous detector and subtraction circuit 26 (see Fig.6), i.e. each element Ui of vector U corresponds to output voltage in the signal channel; vector U dimensions equal to N, i.e. to the amount of the single subapertures (single photodiodes 24, see Fig.5) of the radiation receiver 5 (see Fig. 1); C- control matrix, dimensions of which in the present case are NxN; in the simplest case a matrix C is diagonal, and the elements thereof are determined by the experiment in the preliminary stage of adaptive optics module calibration with the different reference source using; V- vector of output signals of the control unit 27 (see Fig.6), each element Vi of vector V corresponds to the single control signal of the deformable bimorph mirror 2 (see Fig.6); dimensions of said vector V equal to the number of control channels of the deformable bimorph mirror 2 (in the present case N)

Said digital-to analogue 28 (see Fig.6) and said output amplifier 29 convert the output signals of the multiplier unit 27 into the control electric voltage, which is applied to said deformable bimorph mirror 2 (see Fig.1), comprising a casing 19 (see Fig.3 and Fig.4) and a semi-passive bimorph structure, formed by the reflective plate 20 and the hexagonal mosaic system of multilayer piezoelectric elements 21 of hexagonal or circular configuration (in Fig.4 multilayer piezoelements of hexagonal configuration are shown). The electric control voltage is applied to the multilayer piezoelement through the electrical connector 23 and connecting wires 22 (see Fig.3). Owing to the internal connections the electric voltage is applied to each piezolayer (or piezoplate) in each multilayer piezoelement, that is in principle important to get the above-mentioned technical result. When electric voltage being applied to multilayer piezoelements they are deformed owing to inverse piezoelectric effect, that is the cause of the deformations (bending) of corresponding local semi-passive bimorph structure and as consequence of the deformable bimorph mirror reflection surface.

In the most simple case (in the presence of only one control electrode or only one multilayer piezoelement of circular configuration, the centre of which coincides with the mirror centre) the configuration of the semi-passive deformable bimorph mirror reflective surface W(r) when control voltage V being applied, is circumscribed by the next formula (within the limits of the control electrode or the piezoelement):

$$W(r)=-K(r/r_o)2V, \ 0<r<ro \qquad\qquad (3)$$

where $r_o$- control electrode (multilayer piezoelement) radius, K- mirror amplitude sensitivity. Said analytical formula (2) is received in the work: P.Jagourel, P.-Y.Madec, M.Sechaud. "Adaptive Optics: A bimorph mirror for wavefront correction. "-Proc. SPIE, 1990, vol.1237, p.394-405; the experimental verification- in the work A.G. Safronov, Kvantovaya elektronika, 1995, v.22, N 11, pp. 1113.-There is necessary to note that formula (2) doesn't take into account a piezoceramic hysteresis effect and is noted for the deformable mirror with the initial plane configuration of the reflective surface thereof. It is obvious an equation (2) circumscribes a paraboloid of revolution with a curvature radius at the apex $R_{cr}$:

$$R_{cr} = ro^2/2KV \tag{3}$$

which is inverse proportional to said control voltage V. It's clear thus, that in the simplest case of multilayer piezoelectric element of circular configuration there is one-to-one correspondence between the corresponding photodiode difference signal, proportional to the distorted wavefront curvature, and the deformable bimorph mirror reflective surface curvature, proportional to control voltage (in the present case there is meant, that the difference signal is taken away from the radiation receiver photodiode, the arrangement and the dimension of which correspond to the bimorph mirror multilayer piezoelement). Therefore for the considerable case the deformations of the bimorph mirror with one central piezoelement when the control voltage, the magnitude of which is proportional to the photodiode difference signal, being applied will result in wavefront curvature correction (compensation) in the input (distorted) optical beam. The considered simplest case in the proposed adaptive optics module corresponds to the central multilayer piezoelement of the deformable bimorph mirror (see Fig.4) and to the central photodiode of said radiation receiver(see Fig.5). It is clear that in the case of hexagonal configuration of the piezoelement and the radiation receiver subaperture the above-adduced reasoning remain valid, since a difference of a hexagon area from the area of the circle, inscribed into said hexagon, is insignificant.

For the multilayer piezoelements 21, shown in Fig.4, a configuration of the bimorph mirror reflective surface when the deformation of the elements being taken place will differ from the formula (2) even for a case when said piezoelements will be circular. It's caused owing to displacement of the piezoelements to the mirror edge. Nevertheless within the limits of the most internal multilayer piezoelement said difference will be insignificant and one may consider that the bimorph mirror reflective surface curvature is proportional within the limits of said piezoelement to control voltage, applied to said element (e.g., for the bimorph mirror, comprising the monolithic piezoelectric plate and segmental control electrode it is verificated by calculated and experimental data in the next work: . A.V. Ikramov, I.M. Rostchupkin, A.G.Safronov, Kvantovaya elektronika, 1994, v. 21, N 7, pp. 665-669). When the control voltage, proportional to the difference signal from the corresponding photodiode 24 (see Fig.5) of the radiation receiver being applied to the internal piezoelements 21(Fig.3 and Fig.4) a correction of the local curvature of the input optical beam distorted wavefront will be take place therefore.

There is necessary to note that the last reasoning remain valid in that case, if the summary aperture, occupied by the internal multilayer piezoelements 21 (see Fig.4) is found within the input optical beam cross-section. This also relates to the summary aperture occupied by the internal photodiodes 24 (see Fig.5) of the radiation receiver.

There is necessary to note that the single multilayer piezoelements 21 of the bimorph mirror (see Fig.4) and the single apertures 24 (photodiodes) of the radiation receiver (see Fig.5) may have the circular configuration (it isn't shown in Fig.4 and Fig. 5). In this case as compared with the hexagonal configuration thereof, as shown in Fig.4 and Fig.5, the greater symmetry of a single multilayer piezoelement response function is provided owing to equal curvature of said response functions in different possible angular directions. Owing to grater symmetry the better correspondence between the real local curvature in the input optical beam distorted wavefront( the corresponding photodiode difference signal is proportional said curvature) and the controllable local curvature of the deformable bimorph mirror reflective surface is provided, that results finally in the existing phase distortion compensation (correction) accuracy increasing. Nevertheless there is necessary to say in turn that the hexagonal configuration of the piezoelements 21 (see Fig.4) and the photodiodes 24 (see Fig.5) provides the most high-density packaging within the limits of the light aperture. The more dense occupation of the light aperture by the piezoelements provides, when other things being equal the greater (though insignificantly) reflective surface deformation amplitude, which is proportional to the piezoelement(s) area, see formula (2).

For the peripheral multilayer piezoelements 21, shown in Fig.4, the bimorph mirror reflective surface configuration in the light aperture zone corresponds under the deformation of said elements to local peripheral tilt, i.e. when control voltage being applied to the peripheral piezoelement 21 the reflective surface 20 (see Fig.3)of the deformable bimorph tilts at certain in the light aperture corresponding zone (see A.V.Ikramov, S.V. Romanov, I.M. Rostchupkin, A.G. Safronov, A.O.Sulimov, Kvantovaya elektronika, 1992, v. 19, N 2, pp. 180-183).A strict execution of said condition is achieved by the conditioning of the transversal dimension of the optical beam, being incident to said bimorph mirror (see Fig. 1) and the arrangement of the peripheral multilayer piezoelements 21 (see Fig.3 and Fig.4). A characteristic example for the segmental electrode of the monolithic piezoelectric plate is adduced in the work: R.Arseuault, D.Salmon, J.Kerr and et.al."PUEO", The Canada-France-Hawaii Telescope Adaptive Optics Bonnette.1 "System Description"-Proc. SPIE, 1994, vol.2201 p.833-842. It is clear thus that there is one-to-one correspondence between the difference signal of the radiation receiver certain peripheral photodiode 24 (see Fig.5), which is proportional to the distorted wavefront local tilt in the corresponding zone of the input optical beam cross-section on the one side and the deformable bimorph mirror reflective surface local tilt in the light aperture corresponding zone, which is proportional to control voltage, applied to the corresponding peripheral multilayer piezoelement on the other side. When control voltages, proportional to the difference signals from corresponding peripheral photodiodes 24 (see Fig.5) of the radiation receiver, being applied to the peripheral piezoelements 21 (see Fig.3 and Fig.4) the correction of the input optical beam distorted wavefront local edge (peripheral) tilts will therefore take place. Beside of the described phase correction in the proposed adaptive optics module it is possible to compensate wavefront common tilts with using of dynamic aligning head 1( see Fig.1) It realises in a following way. The difference electric signals are applied from the synchronous detector and the subtraction circuit 26 (see Fig.6) to the converter 30, which generates control signals by two piezoelectric drives 14 and 17 (see Fig.2) of the dynamic aligning head 1(see Fig.1). In the simplest case said piezodrive control signals may be generated by uniting of all peripheral photodiodes 24 (to say more exactly the difference signals thereof) in four separate groups, the arrangement each of which corresponds to one of four directions of two mutually perpendicular axes X and Y, shown in Fig.2. Further the summation of all difference signals in each of said group is made, that results in four single signals generation, each of which corresponds to one of four directions of two mutually perpendicular axes X and Y. (Instead of said summary signals one may simply choose four difference signals of four single peripheral photodiodes 24, the arrangement each of which corresponds to one of axes X and Y directions). Then a mutual subtraction of the signals, corresponding to the opposite directions of one axis X or Y is made. It is clear that each signal, generated in such a manner, is proportional to the input optical beam wavefront tilt angle along corresponding axis. All above-listed operations are executed by said converter 30 (see Fig.6)hereafter the generated signals are amplified in said amplifier 29 and are applied to the corresponding drives 14 and 17 (see Fig.2)of the dynamic aligning head (see Fig. 1).

The connection of corresponding piezodrives 14,17 and the supports 13,16 (see Fig.2 with a movable base 15 and frame 18) is made in the form of a hinge, that provides a tilts of the movable frame 18 along two mutually perpendicular axes X and Y ,when the displacements of the corresponding piezodrives 14 and 17 being taken place. The deformable bimorph mirror 2 is secured in the movable frame 18 of the dynamic aligning head 1(see Fig.1). When control voltages are applied from the amplifier input 29 (see Fig.6) to said piezodrives 14 and 17 (Fig 2) by the rotation of the deformable bimorph mirror 1 (Fig.1) the compensation of the input optical beam distorted wavefront common tilts takes place along two axes. There is necessary to note that as it said above instead of special dynamic aligning head, the operation diagram of which is presented in Fig.2, the standard production samples may be used (an example was presented above, see page ). In addition to this the use of piezoelectric control drives in said dynamic aligning head isn't also obligatory. Instead of them there is in principle possible to use any other drives, in particular, electrostrictive, electromagnetic drives, etc.

When the dynamic phase distortions, i.e. time-varied, being taken place, the operation of said adaptive optics module is analogous to the above-described with the difference that the compensation of the wavefront local curvature, local peripheral tilts thereof and common tilts in each said corresponding channel is an iterative process, the purpose of which- an optics system quality improving (an image improving, a dynamic focusing, etc.).

On the basis of above-stated one may thus assert that the proposed adaptive optics module executes the effective compensation of the optical radiation phase distortions. In accordance with the above-conducted consideration the described design provides a guaranteed substantial range broadening and the optical radiation phase distortion compensation accuracy increasing owing to the combination of all said characteristic features with the simultaneous increasing of the accepted power level thereof and the simplification of said adaptive optics system, i.e. said combination of all characteristic features enables to get said technical result.

It is appropriate to make some remarks relatively to the adjustment and optimisation of the proposed device. Firstly the above-mentioned repeatedly the proportionality between the radiation receiving signals on the one side and the deformable bimorph mirror 2 and dynamic aligning head 1 control actions on the other side is achieved by the experimental selection of gain factors of the amplifiers 25 and 298 in the corresponding channels of the electronic amplifier-converter 8. Secondly one may achieve the further increasing of the accuracy of the phase distortion compensation and decreasing of system time convergency by adding extradiagonal elements into the matrix C (formula 1). Said extradiagonal elements of the matrix C are determined experimentally by the adaptive optics module calibration with different reference light sources using.

There is necessary also to note that one more feature exists in the proposed adaptive optics module as compared with the prior art and known analogues, resulting in the optical radiation phase compensation accuracy increasing. As stated above both in the prior art and in the analogues the deformable bimorph mirrors with the control electrodes in the form of annular segments are used. The dimension thereof in the different angular directions is therefore different. Hence it appears that when control voltage being applied to such the local curvature of said mirror reflective surface (i.e. within the limits of electrode) will be different for different directions. It is in particular obvious from the formula (3), in which the reflective surface local curvature radius is proportional to the square of the electrode radius ro. The more precise calculations and the evident results for the control electrodes are presented in the work: A.V. Ikramov, I.M. Rostchupkin, A.G.Safronov, Kvantovaya elektronika, 1994, v. 21, N 7, PP 665-669.

One of the results in said work lies in that a cross-section of the segmental electrode response function is an ellipse, that, strictly speaking, means the differ local curvature of the bimorph mirror reflective surface (within the limits of the electrode) in different directions, that in turn is equivalent to the different correctable local curvature of the radiation wavefront, reflected from said mirror in different directions. On the other side the wavefront local curvature, measured by the radiation receiver within the limits of the single subaperture doesn't comprise some selected angular directions, in which a local curvature radius would differ substantially from the other directions. One of the reason of that is , by way of illustration, the incidental phase distortion character in the input optical beam. In addition to this there is no reason for supposing that the wavefront local curvature in the input optic beam within the limits of the single aperture of said radiation receiver will differ namely in that two spatial directions, in which said subaperture has substantially different geometrical dimensions ( for the segmental subapertures of said radiation receiver in the prior art said directions correspond to the radial direction and to the direction, that is perpendicular thereto). In the known analogues and in the prior art there is thus a disproportion between a real measured wavefront local curvature within the limits of the single subaperture of the radiation receiver and the correctable local curvature within the limits of the corresponding control electrode of the deformable bimorph mirror, caused by a low order of the spatial symmetry of the mirror control electrode. It is clear that said disproportion results in the phase distortion compensation residual error increasing in the known analogues and in the prior art, and in the compensation accuracy decreasing.

As distinct from the known analogues and the prior art in the proposed adaptive optics module a configuration of the single multilayer piezoelectric elements is either circular or hexagonal, that provides an equality (or almost equality) of said piezoelement dimensions in the different angular directions as compared with the control electrode segmental configuration in any case in the prior art and the analogues. In the proposed module the single piezoelement response functions will therefore have the greater symmetry, i.e. the radii of the surface mirror local curvature within the limits of corresponding piezoelement will be identical (or almost identical) for different angular directions. As a result there will be getting the full (or almost full) correspondence between the measured local curvature and the corrected local curvature as compared with the prior art in any case. It results correspondingly in the optical radiation phase distortion compensation accuracy increasing in the proposed adaptive optics module.

In the present case the corresponding characteristic feature of the proposed invention is that the multilayer piezoelectric elements of the semi-passive bimorph structure of said deformable bimorph mirror have the hexagonal or circular configuration and form the hexagonal mosaic system and said radiation receiver is made in the form of the hexagonal array of photodiodes with the circular or hexagonal light aperture. It is necessary to note that the above-adduced reasoning are in the present case fully correct and urgent relatively to the known from the prior technical level adaptive optics system of the compensation of the atmospheric phase distortion in the telescope, comprising a semi-passive deformable bimorph mirror with the hexagonal system of 19 or 37 control electrodes (see page ). Thus only the combination of all characteristic features stated in claim 1 enables to get substantial technical result, namely, a guaranteed considerable increasing of the optical radiation phase distortion compensation accuracy firstly, and the broadening of the range thereof secondly.

The utilization of an additional array of lens 31 in the proposed adaptive optics module is shown in Fig.7, and the design and arrangement of its single subaperture 32 is shown in Fig. 8. In the present case the operation of the adaptive optics module is analogous to the above-adduced with the difference that both extrafocal images, corresponding to two maximum but opposite in sign saggings of the modulating mirror 4 (see Fig.7) are forming not on the radiation receiver 5 directly but on the array of lenses 31. Each subaperture 32 (see Fig.8) of said array directs an optical radiation (brings said radiation into focus) to the corresponding photodiode 24 (see Fig.5) of the radiation receiver (see Fig.7). In all other respects the operation of said proposed module, including all above-mentioned niceties, corresponds to the above-adduced description. In accordance with the above-conducted consideration said described design provides the adaptive optics module sensitivity increasing and the further (additionally to Claim 1) adaptive optics system simplification owing to the combination of said characteristic features- namely that said module is provided with the hexagonal array of lenses with circular light apertures, arranged in front of the radiation receiver- i.e. enables to get the above-mentioned technical result. It is necessary to note that the single photodiodes 24 (see Fig.5) of the radiation receiver 5(see Fig.7) may dispose in the focuses of corresponding subapertures 32 (see Fig. 8) of the lens hexagonal array (see Fig. 7, pos.31). Just that very case is shown in Fig.7. In addition to this there is possible in the present case to use single photodiodes with the dot subaperture (the sensitive pad), e.g., avalanche-type.

The utilisation of the set of the fiber-optic cables 34 in the proposed adaptive optics module is shown in Fig. 9. In the present case said module is provided with the optical element 33, conjugated to the lens hexagonal array on the one side. The focal power and the length of said optical element 33 are selected in such a way, that the focuses of all subapertures of the lens hexagonal array would coincide with the back plane thereof, as it is shown in Fig.9. Each fiber-optic cable 34, conjugated through said optical element 33 to single aperture of lens hexagonal array (to say more exactly to the focus thereof) on the one side, and to the corresponding photodiode of said radiation receiver 5 on the other side, provides a transmission of the optical radiation, incoming to the present subaperture of the lens array, to the corresponding receiver photodiode. In all other respects the operation of said proposed module including all above-mentioned niceties, corresponds to the above-adduced description.

It is necessary to note that the entry or extraction of the optical radiation in each fiber-optic cable 34 (or from it) may be carried out by means of the gradient optical elements (gradans), not shown in drawings. In addition to this the single photodiodes of said radiation receiver 5 may be arranged not in the form of above-described hexagonal array but in the random order.

The utilisation of the casing 9 with the input 10 and the output 11 optic windows in said module is shown in Fig.1. In the present case the input optical radiation (a beam) passes through said input optical window 10 in the common casing 9 of said adaptive optics module. In said casing all optics elements including the radiation receiver 5 are disposed. The output (corrected) optical beam is extracted outside from the output optical window 11. Said window may be arranged both in the path of the beam, reflected from the beam-splitting element 3 (shown in Fig. 1), and in the path of the beam passed through sad element ( not shown in Fig.1). In the last case the arrangement of the modulating mirror 4 is also changed. In all other respects the operation of said proposed module, including all above-mentioned niceties, corresponds to the above-adduced description.

It is necessary to note that in the present case the input optical window may be made in the form of an objective, the input light aperture of which corresponds to the transversal dimension of the beam, entering into said module, and the output light aperture thereof is conditioned with the deformable mirror controllable light aperture with regard for tilt angle of said mirror relatively to the beam, being incident thereto. Said distinct of the proposed adaptive optics module provides the substantial broadening of the functional potentialities thereof. Really in such a case the proposed module may be stocked with a set of different accessory heads, each of which provides the conditioning of said module with the external optics system. Analogous optical heads may be also used instead of said output optical window 11, that isn't shown in drawings. It is necessary to note that with the purpose the input optical radiation level power increasing the deformable bimorph mirror 2 (see Fig.1) in the proposed adaptive optics module may be made in the form of a coolable product. This species of the present invention isn't shown in drawings. In such a case an operation of the proposed module including all above-mentioned niceties, corresponds to the above-adduced description. In according with the above-conducted consideration said described design provides the input optical radiation accepted power level increasing owing to the combination of said characteristic features- namely that said deformable bimorph mirror is made in the form of the semi-passive bimorph structure and simultaneously in the form of the coolable product, i.e. enables to get the above-mentioned technical result.

INDUSTRIAL APPLICATION

An adaptive optics module may be realised with using of the standard industrial equipment, known materials and production operations. The main components of the proposed adaptive optics module are either standard or experimental industrial products or said components are described in other patents of the same inventor.

As compared with the tip-to-date systems of compensation (correction) of the optical (laser) radiation wavefront distortions, e.g., as compared with the industrial one-channel adaptive optics system of German Company Diehl GmbH & Co., used in the laser industrial complexes, the proposed adaptive optics module has the next advantages (without regard for different number of the channel):

1. The simplicity of its design, which is provided by the minimum set of the optical and electronic components, utmost simple in turn.

2. Realisation of all optics system in the common casing in the form of an autonomous optoelectronic device. Such feature enables to use said device as an attachment (module) to the laser system to improve the characteristics thereof. For example, the industrial laser may be stocked with said module, the conditioning of a light aperture is executed by means of the corresponding collimator, which as a accessory head is mounted instead of the input window. Analogously said device may be used with the other laser systems.

3. The absence of an interference into the circuit and design of the laser or optical systems, in which the phase distortions are compensated. This merit may be very important, since there is more complicated to develop and put in production, e.g., the production of laser with an adaptive resonator. In the latter case there have to decide the problems of laser circuit and design optimisation. Nevertheless it will be as a matter of fact the development and production of absolutely new laser with all following consequences. In the case of the proposed adaptive optics module utilisation all these problems no longer arise. There is analogous situation with the other classes of laser or optics system.

4. The universality of said adaptive optics module relatively to the optics system of different classes, including laser system. It's clear that said adaptive optics module as the specific device may be used in the combination with the different systems for its designated purpose. The same module may operate with the industrial laser, with the interferometer and with the laser radiation detective system. The set of the accessory heads, used for the conditioning the light apertures, enables to broaden substantially the specific module potentialities.

5. The universality of the adaptive optics module circuit and design with respect to the laser or optics system of different spectral ranges. When the laser or optical radiation wavelength being changed, the module circuit remains invariable and only: 1) the reflective coatings of the mirror element; 2) the material of pass-through optics ( the external windows and a beam-splitting element) and 3) the radiation receivers will be changed in such a case. But the design parameters of the above-listed components remain invariable.

6. The possibility of increasing as much as possible of the channel number for the further increasing of the efficiency and accuracy of the phase correction without any circuit, structural and technological changing in the adaptive optics module.

7. And the last. The realisation and utilisation of the adaptive optics module enable to reduce the requirements for the optical and laser system quality. For example: the tolerance for the optic element disalignment, the design stability, the active medium purity, etc. may be reduced in the industrial lasers and analogously for the other laser systems. Such circumstance substantially exerts on the cost of said systems; without doubt its price will be reduced. In addition to this, the field of the application of the laser and optics systems, which don't find a wide utilisation owing to low characteristics thereof, will be broaden, since said characteristics will be improved owing to the laser adaptive module utilisation.

The present invention may be practically used in any optics systems for the execution of the optical beam phase distortion dynamic correction (compensation) with high accuracy, e.g., in the astronomical telescopes, for the purpose of remote light sources image quality improving (i.e. for the compensation of the earth turbulence effect).

**Claims**

1. An adaptive optics module, comprising a correcting device, including deformable bimorph mirror, a beam-splitting element, a modulating mirror, a master oscillator, a modulating mirror signal amplifier, an input of which is connected with one of master oscillator outputs, and an output of which is connected with said modulating mirror, an image-forming optics, a radiation receiver, made in the form of the array of photodiodes, and an electronic amplifier-converter, the inputs of which are connected with said correcting device, characterised in that said correcting device is made in the form of a dynamic aligning head with an installed therein deformable bimorph mirror, made in the form of a semi-passive bimorph structure, comprising hexagonal mosaic system of the multilayer piezoelectric elements of hexagonal or circular configuration, said radiation receiver is made in the form of hexagonal array of photodiodes with a circular or hexagonal light aperture, and said electronic amplifier-converter is made with a possibility of generating of the dynamic aligning head drives control signals.

2. A module as claimed in Claim 1 characterised in that it is provided with a hexagonal array of lenses with the circular light apertures, said array arranged in the front of a radiation receiver.

3. A module as claimed in Claim 2, characterised in that each of the radiation receiver photodiodes is disposed in the focus of a lens hexagonal array corresponding aperture.

4. A module as claimed in Claim 2 characterised in that it is provided with a set of fiber-optic cables, each of which is conjugated to the single subaperture of the lens hexagonal array on the one side and to the radiation receiver corresponding photodiode on the other side.

5. A module as claimed in Claim 4 , characterised in that it is provided with an optical element, conjugated to a lens hexagonal array on the one side and to a set of single fiber-optic cables on the other side, the focuses of all subapertures of the lens hexagonal array being coincided with a back plane of said optical element.

6. A module as claimed in any Claims 1-5, characterised in that it is provided with a common casing, wherein all optical components are disposed, including a radiation receiver, said casing comprises the input and output optical windows, the input optical window being disposed in front of the deformable bimorph mirror in a path of a beam, incoming thereto, and the output optical window being disposed beyond a beam-splitting element in a path of a beam, reflected therefrom or passed therethrough.

7. A module as claimed in Claim 6, characterised in that an input optical window is made in the form of objective, an input light aperture thereof corresponds to a transversal dimension of a beam, entering into said module, and an output light aperture thereof is conditioned with a deformable bimorph mirror controllable light aperture with regard for a mirror tilt angle relatively to a beam, being incident thereto.

8. A module as claimed in any Claims 1-7, characterised in that a deformable bimorph mirror is made in the form of coolable product.

9. A module claimed in any Claims 1-8, characterised in that an electronic amplifier-converter includes a preamplifier, the inputs of which are connected with the radiation receiver corresponding photodiodes, and the outputs of which are connected with the inputs of the synchronous detector, provided with a subtraction circuit, one of the inputs thereof is connected with a master oscillator output, and outputs thereof are connected with a converter and a multiplier, connected in parallel each other, said converter and multiplier connected respectively in series with the dynamic aligning head drives through a first amplifier and with the deformable bimorph mirror multilayer piezoelectric elements through a digital-to-analogue converter and a second amplifier.

FIG. 1

**FIG. 2.**

Fig. 3

Fig. 4.

**Fig. 5.**

From the radiation receiver 5

25

26

N

30

27

2

28

29

2

29

To the dynamic alignment head 1

To the deformable bimorph mirror

Fig. 6.

From the beam splitter 3

31    5

To the electronic
amplifier-converter 8

4.

**FIG. 7.**

32

Fig. 8.

From the beam splitter 3

31    33                                    34        5

To the electronic
amplifier-
converter 8

4

FIG. 9.

EP 0 779 530 A1

**INTERNATIONAL SEARCH REPORT**

International application No.
PCT/RU  96/00161

A.  CLASSIFICATION OF SUBJECT MATTER

IPC$^6$ : G02B 26/06

According to International Patent Classification (IPC) or to both national classification and IPC

B.  FIELDS SEARCHED

Minimum documentation searched (classification system followed by classification symbols)

IPC$^6$ : G02B 5/08, 5/10, 26/00-26/08, G02F 1/29

Documentation searched other than minimum documentation to the extent that such documents are included in the fields searched

Electronic data base consulted during the international search (name of data base and. where practicable. search terms used)

C.  DOCUMENTS CONSIDERED TO BE RELEVANT

| Category* | Citation of document, with indication, where appropriate, of the relevant passages | Relevant to claim No. |
|---|---|---|
| A | EP, A1, 0546811 (HUGHES AIRCRAFT COMPANY) 16 June 1993 (16.06.93) --- | 1-8 |
| A | US, A, 5396364 (HUGUES AIRCRAFT COMPANY), 07 March 1995 (07.03.95) --- | 1-8 |
| A | SU, A1, 1615655 (LENINGRADSKY INSTITUT TOCHNOI MEKHANIKI I OPTIKI), 23 December 1990 (23.12.90) --- ----- | 1,9 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure. use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search

28 August 1996 (28.08.96)

Date of mailing of the international search report

05 September 1996  (05.09.96)

Name and mailing address of the ISA/
RU

Facsimile No.

Authorized officer

Telephone No.

Form PCT/ISA/210 (second sheet) (July 1992)

24